# EUROPEAN PATENT APPLICATION

(11) **EP 2 924 565 A1**
(43) Date of publication of application: **30.09.2015**
(21) Application number: 14305421.1
(22) Date of filing: 24.03.2014
(51) Int. Cl.: G06F 9/445, G06F 17/30

(54) **Web-application-launch application programming interface**

(71) Applicant: Hewlett-Packard Development Company, L.P., Houston, Texas 77070 (US)
(72) Inventor: Picard, Jean-Charles, 06901 Sophia-Antipolis (FR)
(74) Representative: Delumeau, François Guy

(57) **Abstract**

The present disclosure discloses a web-application-launch application programming interface (API) component for integration to a host web application or portal. The web-application-launch API component comprises a launch services module to manage execution of a launch of a web application external to the host web application or portal. Execution of the launch of the external web application is called by a component of the host web application or portal. The web-application-launch API component further comprises an API specifying a launch-definition format applicable to a launch to be executed by the launch services module. A launch definition according to the specified launch-definition format includes a URL template comprising a list of keywords. The launch services module comprises a keyword-resolution module. The keyword-resolution module of the launch services module is responsive to a call for execution of a launch to resolve, dynamically, the keywords of the URL template in the launch definition of the called launch. The launch services module comprises an execution module to implement execution of a called launch. The launch is executed in accordance with the keywords in the URL template of the called launch as resolved by the keyword-resolution module when execution of the launch is called.

## Description

### BACKGROUND

Application programming interfaces (APIs) specify how software components should interact with each other, typically to achieve performance of some task. An API may be likened to a kind of coding contract that specifies, for instance, how a computer program should access a database, control a peripheral device, and so on. For example, if a programmer wishes to write a set of machine-readable instructions for a processor to enable the processor to read and analyse data from Twitter^{®} then he may base the instructions on the Twitter API.

APIs can be made up of different elements depending on the components that are interacting, and the type of interaction. For example, APIs may include libraries that specify the variables, classes of objects, methods, routines, data structures, functions, command formats, and so on, that may be involved in the interactions between the components.

### BRIEF DESCRIPTION OF THE DRAWINGS

Figure 1 is a diagram that represents schematically some functional modules in a host application integrating a web-application-launch API component according to a particular example of the present disclosure.
Figure 2 is a flow diagram illustrating an example process to execute a launch using the system illustrated in Fig.1.
Figures 3A to 3E are screen shots illustrating use of a launch mechanism in a portlet of a portal that integrates a web-application-launch API according to a particular example of the present disclosure.
Figure 4 is a screen shot showing a page displayed to a user by the graphical user interface (GUI) of a web application that integrates a web-application-launch API component according to a particular example of the present disclosure.
Figure 5 is a diagram illustrating a launch definition that is specified in accordance with a launch model provided by a web-application-launch API according to a particular example of the present disclosure.
Figure 6 is a functional block diagram indicating certain elements of a web-application-launch API component according to a particular example of the present disclosure.
Figure 7 illustrates launch services that are provided by a web-application-launch API according to a particular example of the present disclosure.
Figure 8 represents the structure of a URL template that is specified in a launch model defined by a web-application-launch API according to a particular example of the present disclosure.
Figure 9 illustrates a launch library and software developer kit (SDK) that are provided by a web-application-launch API according to a particular example of the present disclosure.
Figure 10 represents an example of an enterprise portal that integrates a web-application-launch API according to a particular example of the present disclosure.
Figure 11 illustrates an example of a computer-readable medium including machine readable instructions that, when executed by a computer, perform execution of a launch of a web application external to a host web application or portal.

### DETAILED DESCRIPTION

Examples of certain application programming interfaces (APIs) will be described below in the context of launching web applications (web services).

Web services offered on the worldwide web have multiplied, and it is now common for web applications and portals to include the capability to launch one or more external web applications (i.e. external to the application/portal calling execution of the launch). For example, a host web application may have a user interface which allows a user to request a map showing the location of a place mentioned in the host web application. Typically, the host web application will respond to the user request by launching an external web application which then provides the host web application with some service (e.g. in the preceding example the external web application provides the host application with a map image to be displayed to the user).

In general, it is complicated and time-consuming for a designer to provide his web application or portal with the capability to launch external web applications, especially if it is desired to make different launches possible. The designer may, for example, wish to make it possible to launch several different external web applications from within the host web application, and perhaps he may wish to have a different selection of launches made possible at one point within the host application compared with the selection that is available at a different location.

In a similar way, the designer may wish the selection of available launches and/or the characteristics of a launch to be different depending on some feature of the context in which a launch is executed. For example, the designer may wish the available selection of launches, and/or the characteristics of a launch, to be different for different users of the host application or, for instance, in dependence on the properties of the platform (personal computer, mobile telephone, tablet, etc.) on which the user is executing the host application, or on other features of the context including but not limited to an identifier of a selected object, a date or date range (for instance to scope the context to a specific range in order to produce, for example, a monthly report). Furthermore, the developer may wish the selection of available launches to depend on some user preference or other option. The launches that are available to a user of the host application/portal in different circumstances may be said to be "visible" in those circumstances.

In general, when a designer provides his web application or portal with the capability to launch external web applications each launch is defined in a static manner. More particularly, each launch tends to be hardcoded, that is, it is specified explicitly by machine instructions which are pre-programmed into the host web application. If the hard-coded launch has some conditional aspect that is related to the context in which the launch takes place then the necessary procedure for adding contextual parameters tends to be pre-defined (hardcoded).

In these circumstances the designer must spend considerable amounts of time and effort to provide his web application or portal with the capability to launch each external web application. The necessary integration work can take weeks and tends to provide very static user interfaces for the end user. Furthermore, it is difficult to add additional launch capabilities (either in terms of adding the ability to launch additional external web applications or in terms of enabling launches to be adapted to additional contextual parameters). In other words the launch capabilities are not readily extensible. Furthermore, it can be difficult or impossible to provide fine-grained control of the visibility of launches in different contexts.

Certain examples according to the present disclosure provide a web-application-launch application programming interface (API) component to plug in to a host web application or portal to provide the host application/portal with the capability to launch external web applications. The web-application-launch API component according to these examples may be said to be "generic" because, when it is integrated into a host application or portal, it facilitates launch of substantially any external web/java application by the host application/portal. In addition to supporting plug-in to standard host web applications, the web-application-launch API component fully supports plug-in to portals (for example by providing additional portlets).

Certain examples according to the present disclosure provide a web-application-launch API component that comprises a launch services module to manage execution of launches, of external web applications, whose execution may be commanded by components of the host application. An API of the web-application-launch API component specifies a format for a URL template that is included in launch definitions. On receipt of a launch-execution command, the launch services module implements a launch-parameter resolution process to resolve launch parameters that are specified in the URL template for the relevant launch. The launch parameters are resolved dynamically when the command for executing a launch is issued, making it possible to associate relevant context to the launch just before the launch executes, and so static launches are avoided.

Web-application-launch API components according to the above-mentioned examples may be generic and easy to integrate into code, such as java. Specifically, they can be integrated into a host web application or portal by a developer/integrator with only a small amount of integration work, and provide a very open and extensible framework in which new launches can be defined. This web-application-launch API component may be considered to be a kind of toolkit which the developer integrates into his host application and which operates, in effect, "behind the scenes"; the developer controls the presentation, for example the occasions when, and manner in which, a user is presented with available launches (e.g. via icons, menu lists and so on displayed in a graphical user interface (GUI)).

In certain examples, the launch services module makes use of a tag-based approach for labelling launches. This provides a simple and readily extensible mechanism for controlling, in a fine-grained manner, which launches are available in specified contexts or areas of the user interface (e.g. toolbar, menu, and so on). This tag mechanism allows the developer to organize the category and scope of the launch applications. Moreover, this approach simplifies the process of searching for the launches that are available at any given time/location in the host application.

To ease understanding, first of all an overview will be given of a host application in which an example of the web-application-launch API component is integrated. Below, unless the context demands otherwise, references to a host application are to be understood as references to a host web application or portal that integrates a web-application-launch API component.

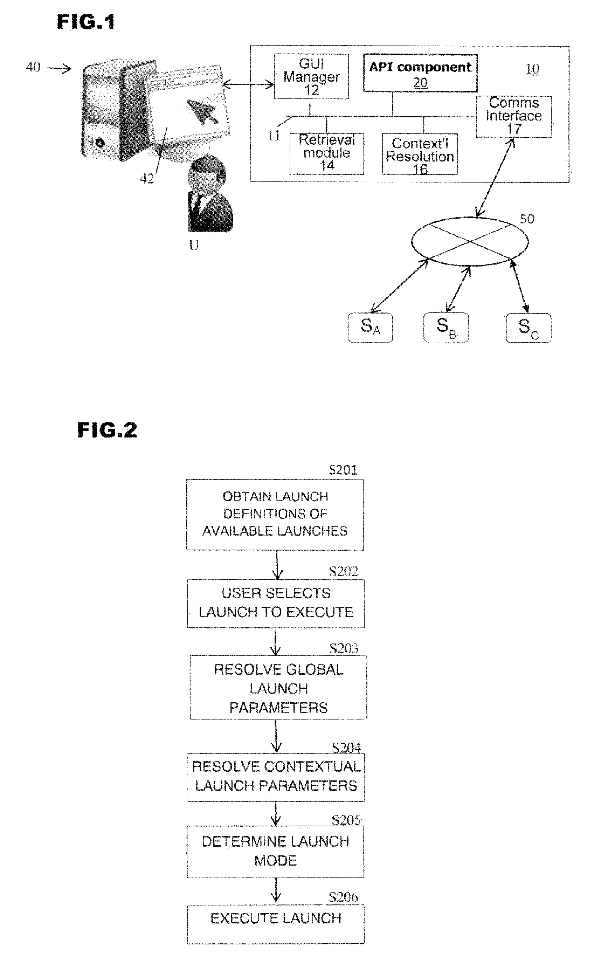

Fig.1 is a diagram which illustrates a host application 10 and its environment schematically, showing certain elements in the form of functional modules. Fig.2 is a flow diagram illustrating the functioning of the host application when a user chooses to execute a launch.

In the example illustrated in Figs.1 and 2, the host application 10 is associated with a work station 40 of a user U and generates a graphical user interface (GUI) 42 on a display of the work station. The user may interact with the GUI 42 to command the launch of web applications external to the host application 10. In the example illustrated in Figs.1 and 2, the external web applications that may be launched via the host application 10 include application WApp₁ hosted on a remote server S_{A}, applications WApp₂ and WApp₃ hosted on a remote web server S_{B}, and application WApp₄ hosted on a remote server S_{C}. The host application 10 and the remote servers communicate via a network 50.

There is no particular limitation on the manner in which the host application 10 is associated with the user's work station 40 and, in particular, the host application 10 may be installed on a hard drive of the work station, provided on a medium readable by the work station 40, accessed by the work station 40 over a network, distributed over plural elements of the previous kinds, and so on. In a similar way there is no particular limitation on the type of network 50 via which the host application 10 communicates with the remote servers. Typically the network 50 will include a wide area network, but it may also include a local area network, a telecommunications network, and so on.

Furthermore, there is no particular limitation on the manner in which the functional modules of the host application 10, represented in Fig.1, are implemented in practice. In Fig.1 the functional modules are illustrated as hardware components which communicate via a bus 11 but additionally or alternatively they may be implemented in software or firmware, that is, using machine readable instructions executed by a processor. It will be understood that Fig.1 omits various functional modules (processing modules, memory modules, and so on) that are liable to be present in a host application, and focuses on certain modules that are relevant to understanding of the present example. Moreover, it will be understood that the present example is not limited by reference to the distribution of functions between the modules represented in Fig.1; the functions may be distributed differently depending on the implementation and, for example, plural functions may be performed by a single module and plural modules may cooperate to achieve performance of a single function.

At various times the host application 10 offers the user U the opportunity to select an external web application for launching. Typically, a GUI management module 12 of the host application 10 generates icons, links, menu list items, and so on, corresponding to the different launches that are available to the user U and these are displayed as part of the GUI 42. The host application 10 has a retrieval module 14 which obtains a list of the available launches, the list being provided by the web-application-launch API component 20.

When the user U interacts with the GUI 42 to select a launch, the host application communicates with the launch services web-application-launch API component 20 to command execution of the identified launch. The API of the web-application-launch API component specifies a format for launch definitions and this format includes a URL template (see the examples below). When the web-application-launch API component 20 receives a launch-execution command it resolves launch parameters (keywords) contained in the URL template included in the definition of the desired launch, using a resolution process. In this example the launch definitions are stored in a launch database (not shown), but any convenient support providing the launch definitions may be used (e.g. web services, CSV file, XML, and so on).

Certain examples of the resolution mechanism are described in detail below. The resolution process involves resolution of global launch parameters specified in the URL template and, optionally, resolution of contextual launch parameters. When the user selects to execute a particular launch, the host application calls the web-application-launch API component 20 for dynamic resolution with the URL template. The web-application-launch API component 20 first solves the global parameters then, if appropriate, solves the contextual parameters in the component calling the launch. For example: a service-level agreement (SLA) status portlet may call the web-application-launch API component 20 to solve global parameters relating to the system platform, then solve contextual parameters such as SLA id, date/time in the portlet itself. The component in which the contextual launch parameters are resolved is represented in Fig.1 by a contextual-keyword resolution module 16.

The web-application-launch API component 20 ensures that all the keywords (launch parameters) of the URL template are replaced dynamically, and this takes place at the time when the launch is being executed, thus reducing the risk of static launch. At the end of the resolution process the final URL to be used for launch execution is returned. Furthermore, according to certain examples the web-application-launch API component 20 determines a launch mode to be used for displaying the launch contents, for example deciding whether the launch contents are to be displayed in a new pop-up web browser window (referred to below as an "external launch") or, in the case where the web-application-launch API component is integrated into a portal, whether the launch contents are, instead, to be displayed embedded in the same page (referred to below as an "internal launch"). Certain examples of the web-application-launch API component that are for integration in a portal conforming to the JSR286 specification provide a new type of portlet dedicated to launch content. In these cases, when an "internal" launch is specified the launch content may be displayed in a new, dedicated launch content portlet that becomes added to the portal, or displayed by updating an existing launch content portlet of the portal. The update of the launch content portlet content may be performed when a notification event is received.

In this example the web-application-launch API component 20 executes the launch. For execution of the launch the web-application-launch API component 20 may make use of a communications interface 17 to communicate, via the network 50, with the remote server hosting the appropriate web application whose launch is specified.

It will be understood from the above description that, according to this example, use of the launch mechanism involves obtaining a list of the definitions of the available launches (S201 of Fig.2). A user may then select, from among the available launches, a particular launch to be executed (S202 of Fig.2). In accordance with this example of the web-application-launch API, the launch definition includes an indication of a launch mode as well as a URL template including global and contextual keywords corresponding to launch parameters. The global keywords correspond to launch parameters whose values can be determined without reference to data that is internal to the host application. The contextual parameters correspond to launch parameters that are dependent on the context that applies when execution of the launch takes place; the developer may map contextual keywords tightly to data that is internal to the host application.

The global keywords of the URL template of the desired launch are resolved (step S203 of Fig.2) in a first stage of the resolution process, then the contextual keywords are resolved in a second stage of the resolution process (S204) and the launch mode for the desired launch is determined (step S205). The web-application-launch API component 20 then executes the launch and the launch contents are displayed in accordance with the determined launch mode (step S206).

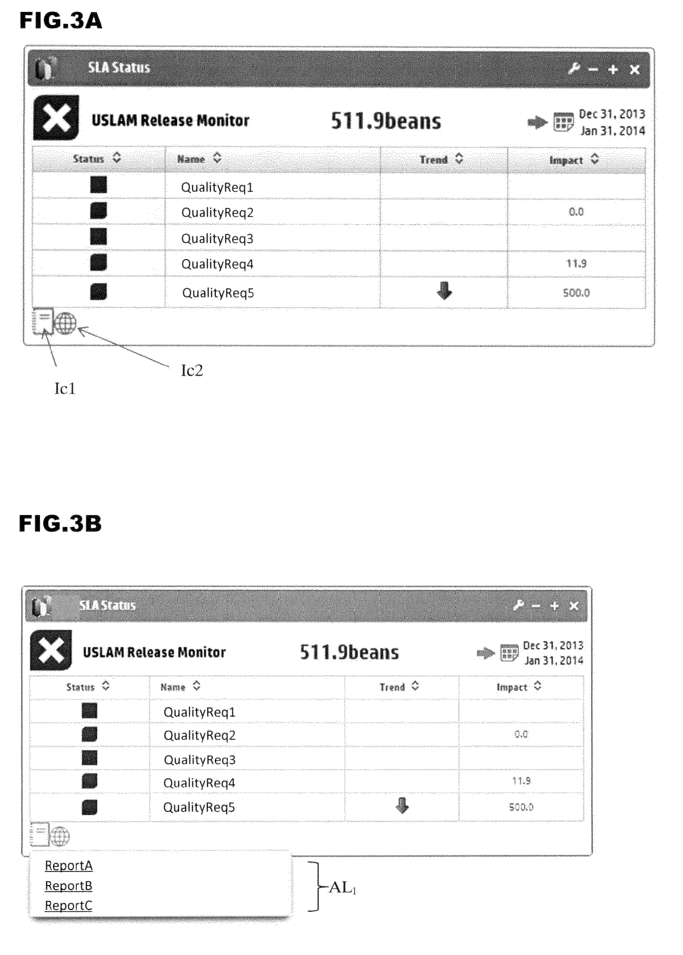

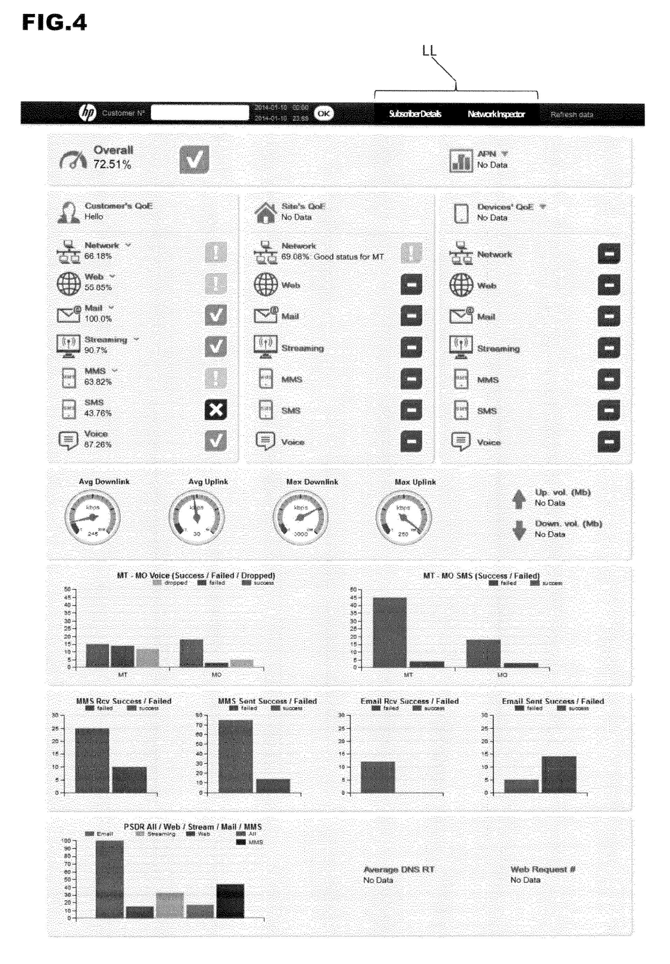

To aid understanding, Figs.3A to 3E illustrate screen shots generated during use of a portal integrating an example of the web-application-launch API, and Fig.4 illustrates a screen shot generated during use of a web application that integrates an example of the web-application-launch API.

In the example of Figs.3A to 3E a portlet called SLA Status is displayed to the user as illustrated in Fig.3A. According to this example, the SLA Status portlet displays two icons, Ic1 and Ic2, to offer the user the ability to view and execute the different types of launches that are currently available to him. In this example the available launches are of two types: reports on the SLA (illustrated using the icon Ic1 that resembles a bound report) and geographical maps (illustrated by the icon Ic2 that resembles a globe).

As illustrated in Fig.3B, when the user clicks on the icon Ic1 he obtains a list AL1 of a first set of launches that are available for execution. The user's click on the icon Ic1 causes the portlet to call the API of a launch services module (described below) with the set of tags "SLA status" and "report". In this example the launch services API provides the list of possible launches matching these tags and the SLA status portlet displays the available launches in a menu list. In this example the list AL1 shows a set of reports that can be generated for the user by one or more web applications external to the host portal.

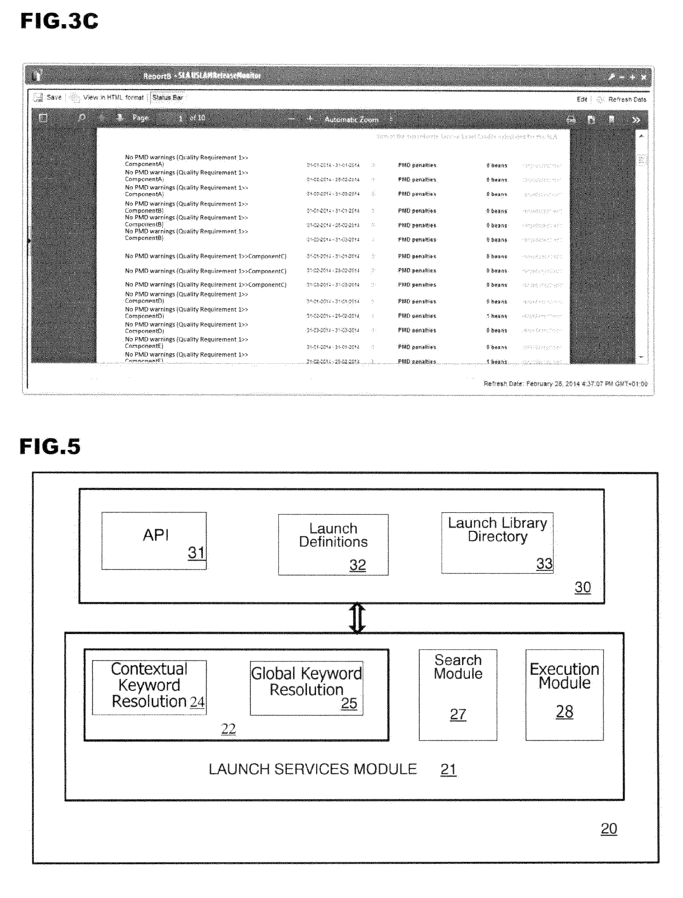

Fig.3C illustrates an example of the launch content that is obtained when the user clicks on the second of the launches indicated in the list AL1 of Fg.3B (i.e. the launch having the display name "Report B"). The launch is executed by the launch services API and the launch contents are returned in the form of the requested report produced based on the current context. The definition of the executed launch may specify that the launch contents are to be provided to the user: by creating a launch content portlet, by updating a launch content portlet that is already displayed, or by popping up a new window. Fig.3C illustrates the case where the execution of the launch selected by the user caused creation of a launch content portlet.

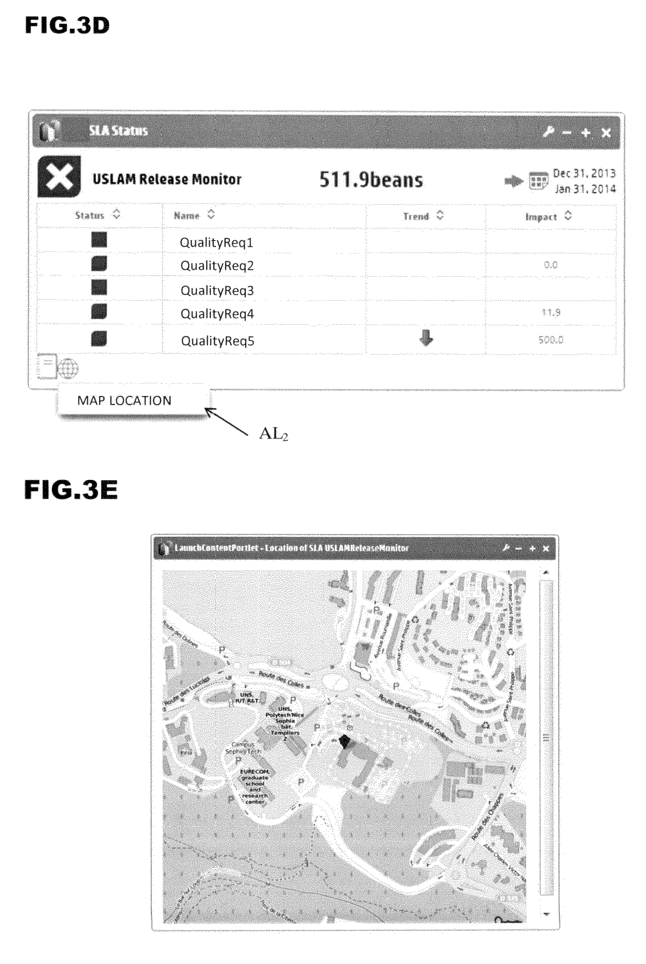

Fig.3D illustrates what happens when the user clicks on the icon Ic2 of Fig.3A: he obtains a list AL2 of available launches of a second type, in this case relating to generation of geographical maps. When the user clicks on icon Ic2 the SLA status portlet calls the list of available launches by sending the launch services API tags "SLA status" and "map". In the example of Fig.3D the launch services API has returned only one available launch (corresponding to obtaining a map from one external map provider). If it is desired to accommodate another map provider, e.g. so the user can obtain a Google^{®} map, then this can be done by adjusting the launch definitions associated with the icon Ic2, for example by using a database editor to alter launch definitions in a database, or using a launch editor in implementations where such editors are provided (see examples below).

Fig.3E illustrates what happens when the user clicks on the single launch indicated in the list AL2 of Fig.3D. In this case the selected launch is associated with a display mode which updates the launch content portlet so the launch content is updated with a geographical map (in place of the report of Fig.3C).

In the example of Fig.4, a web application providing a customer care dashboard (CCD) generates a GUI screen in which there is an embedded list LL of the launches currently available to the user. As illustrated in Fig.4, the available launches are called "Subscriber Details" and "Network Inspector"; these launches are "global" in respect of the page illustrated in Fig.4, using the input of the user interface, and the parameters Customer no. and a date range. In this example, at the time when the CCD web application wishes to generate (or update) the screen display shown in Fig.4 the CCD web application calls the web-application-launch API component for the list of available launches. The user can execute a desired launch by clicking on the desired launch listed on the screen.

The above description considers the overall operation of examples of the web-application-launch API component 20. Fig.5 is a functional block diagram illustrating an example implementation of the web-application-launch API component 20.

In the implementation example of Fig.5, the web-application-launch API component 20 has a launch services module 21 and a memory module 30. In this example the launch services module 21 performs the process of resolving keywords in a launch definition and for this purpose includes a contextual keyword resolution module 24 and a global keyword resolution module 25. The launch services module 21 of this example also includes a search module 27 to search for launch definitions that are visible to a user in particular circumstances. In the present instance the launch services module 21 also includes an execution module for implementing execution of the desired launch.

According to the example of Fig.4, the memory module 30 stores the API 31 (e.g. in the form of files documenting the formats, classes and procedures making up the API) of the web-application-launch API component, as well as the launch definitions 32 and a launch library directory 33 (that will be described in greater detail below). It is to be understood that the API 31, launch definitions and launch library directory do not have to be stored in a common memory and, indeed, they could be stored externally to the web-application-launch API component.

Certain examples of the API of the web-application-launch API component specify a launch model, that is, a way in which launches are defined and exposed in the API. Typically, the developer of the host application determines which launches he wishes to accommodate in his application and stores in a database or XML (eXtensible Markup Language) file the definitions of these launches expressed in conformity with the launch model specified by the web-application-launch API.

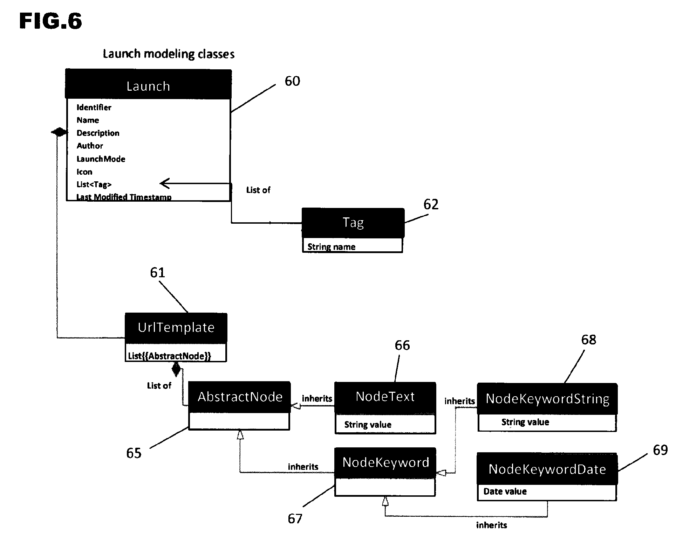

A more detailed description will now be given, with reference to Fig.6, of an example format for launch definitions in conformity with the launch model specified by a particular example of the web-application-launch API. The launch model according to the example illustrated in Fig.6 defines various classes including classes labelled 60-69 in the drawing. An object in the class 60 designated "Launch" in Fig.6 corresponds to a launch definition. As indicated in the example of Fig.6, each launch definition 60 includes the following elements:
- an identifier
- a name of the launch (for display)
- a description of the launch, that includes a URL template (an object in class 61 described below), and includes a textual description (that may be used, for example, to label a tooltip in the user interface)
- the author's name
- a launch mode indicator
- an icon associated with the launch
- a list of tags associated with the launch (the tags are objects in class 62 discussed below)
- a timestamp indicating when the launch definition was last updated.

The launch model example of Fig.6 defines a class 61 designated URLTemplate and objects in this class 61 include a list of objects in a class 65 designated AbstractNode which inherits the values of objects in a class 66 designated NodeText and a class 67 (designated NodeKeyword). Objects in the NodeText class 66 have values that correspond to a string of characters. Objects in the NodeKeyword class 67 inherit values of a class 68 designated NodeKeywordString and in a class 69 designated NodeKeywordDate. Objects in the NodeKeywordString class 68 have values that correspond to a string of characters and objects in the NodeKeywordDate class 69 have values that correspond to dates.

The nature and use of certain examples of the URL template will be described in greater detail below. At present it will simply be mentioned that the URL template has other internal objects to ease the parsing of the URL and the detection of typed launch keywords.

In the launch definition, the LaunchMode property supports 3 states: NEW to create a new launch content portlet internally embedded in a portal, UPDATE to update an existing launch content portlet (avoiding multiple views), and POPUP to externally create a new web window in the web browser (new tab). Each launch definition object is identified by its ID which, thus, needs to be unique (and not duplicated).

The launch definition is not limited to the example given above. If desired, additional classes may be present, for example: a class IS_SYSTEM which indicates whether the launch has been defined by a system administrator (such that it is, in effect, read only), a class IS_CONTEXTUAL which indicates whether the launch requires any contextual launch parameters, and so on. The IS_CONTEXTUAL class enables identification of "global launches" that are available in every component (and such launches may be provided, for example, in a main menu).

Example web-application-launch APIs which specify launch models of the types mentioned above include a URL template including launch parameters (see the examples described in greater detail below). Certain examples of web-application-launch APIs according to the invention specify launch models which omit certain of the other classes indicated in Fig.6.

Example web-application-launch APIs whose launch models specify the use of launch definitions that include a list of tags offer a powerful and extensible mechanism for controlling the visibility of launches in a fine-grained manner. The tags represent a list of metadata (e.g. text) associated with the launch. By using these tags it is possible to define, in a particularly simple and extensible manner, a scope where the launch is applicable. For example, when the developer wishes a particular launch only to be visible at a specific portlet and in a specific part he may associate with this portlet and this part the same list of tags as is assigned to the desired launch. When the host application needs to know which launches are available in particular circumstances during the functioning of the application, it can retrieve the available launches by searching the launch definitions to find launches whose tags match the tags applicable under these circumstances. Launches whose definitions do not match the scope indicated by the relevant tags of the host application are not visible and are ignored by the launch services module.

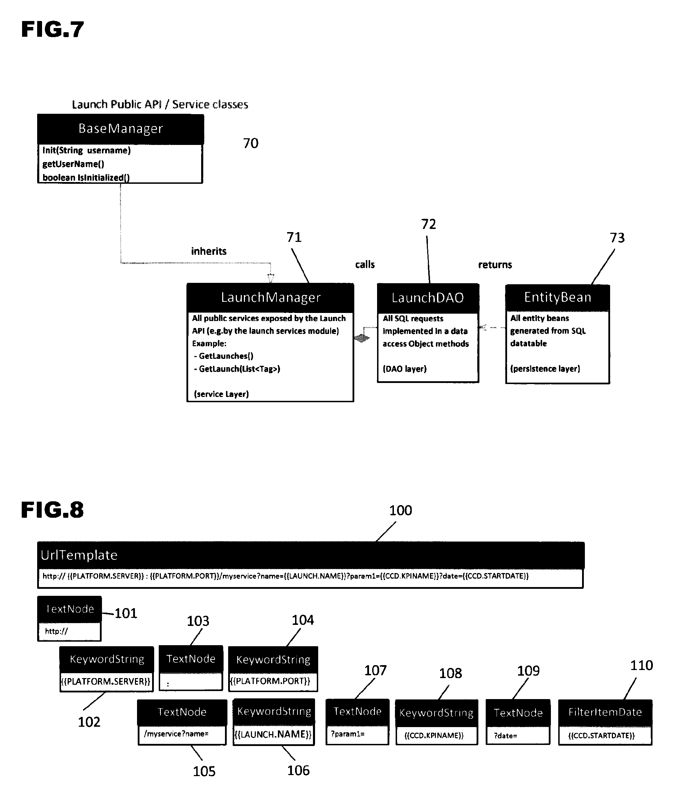

Fig.7 illustrates launch services that are made available to a developer in the launch services module 21 according to one example of the web-application-launch API component, enabling him to search visible launches based on a specific scope (list of tags), as well as the services provided to execute the launch (i.e. to solve, dynamically, keywords listed in the URL template (see examples below), to call the notification ("internal" launches) or popup a new window ("external" launches).

According to the example of Fig.7, the API of the launch services module 21 defines various service classes including classes 70-73 illustrated in the figure. Class 70 is designated BaseManager and objects in this class make use of objects in a class designated LaunchManager (class 71 in Fig.7) to provide the services of the launch services module. For example, objects in the class LaunchManager may retrieve the list of launches that are available under given circumstances (corresponding to a list of tags). Objects in the LaunchManager class 71 may call objects of a class designated LaunchDAO (class 72 in Fig.7). Objects of LaunchDAO class 72 may implement queries in structured query language (SQL) by making use of data access objects (DAOs). Class 73 in Fig.7 represents a class designated Entitybean. Objects in the EntityBean class 73 are used by the launch services module to manage persistent data, e.g. in a database.

As indicated above, certain examples of the web-application-launch API component provide a launch services module that comprises a resolution mechanism and, on receipt of a launch-execution command, this resolution mechanism dynamically solves launch parameters (keywords) specified in the URL template defined in the launch definition of the commanded launch. It may be considered that the URL template lists identifiers of global keywords and the resolution process instantiates the relevant parameter, assigning it an argument which represents its "value" (here the expression "value" is not limited to numerical values).

Certain examples of the web-application-launch API specify a launch model in which the URL templates may include launch parameters of two types: global launch parameters (global keywords) and contextual launch parameters (contextual keywords). It is very simple to extend the list of supported launch parameters. The solution of the global keywords does not depend on any data internal to the application but may depend, for example, on a parameter such as an environment variable, a configuration file property, and so on. On the other hand, contextual keywords can be tightly mapped to internal data of the application. A contextual keyword of this type can only be solved if this internal data is available. For example, in a service-level-agreement (SLA) manager application a contextual keyword "SLA_ID" may be defined and it may be possible to find out the value of this keyword from different internal objects, paths, etc. in the application.

Thus, for example, in the case of a URL template
http://{{ENV.SERVER}};{{ENV.PORT}}/myservice?param1={{USLAM.SLA_ID}}
{{ENV.SERVER}} and {{ENV.PORT}} may be global launch parameters that are solved using a launch library ENV, and {{USLAM.SLA_ID}} may be a contextual keyword that is solved using the code of a portlet that calls the launch definition containing this URL template. All the keywords of the URL template are solved dynamically at launch execution to provide a resultant URL used to launch the desired web application.

The use of a launch library directory to store global keywords enables the sharing, between projects, of common launch keywords that are independent of a specific context.

Fig.8 provides an example of a URL template and illustrates how the URL template may be processed to decompose it into component parts (according to their type and format), to isolate static text from keywords that are solved dynamically. In the example of Fig.8, a URL template 100 consists of a list of node portions 101 through 110. The odd numbered node portions 101, 103, 105, 107, and 109 are text node objects which help the URL template to be parsed. The even numbered node portions 102, 104, 106, 108 and 110 are keywords to be solved at execution of the launch whose launch definition includes the URL template 100. In this example, items 102, 104 and 106 are global keywords and items 108 and 110 are contextual keywords.

As indicated in the example of Fig.8, the following naming convention is used for the keywords: {{OBJECT.ATTRIBUTE}}, where OBJECT qualifies a launch library where the keyword may be found, and ATTRIBUTE represents the data to solve.

In one example implementation the following launch libraries are defined:
- **ENV** (environment), defining keywords such as {{ENV.JBOSS_HOME}}, {{ENV.USERNAME}}, {{ENV.LOCAL}}, and so on;
- **LAUNCH** (to expose launch information itself) defining keywords such {{LAUNCH.ID}}, {{LAUNCH.NAME}}, and so on;
- **DATE** (date management), defining keywords such as {{DATE.NOW}}, {{DATE.-1H}}, {{DATE.+1H30M}}, and so on;
- **JVM** (java virtual machine) defining keywords such as {{JVM.HEAP}}, {{JVM.CLASSPATH}}, and so on; and
- **PLATFORM** (platform or system), defining keywords such as {{PLATFORM.SERVER}}, {{PLATFORM.PORT}}, and so on;
as well as some domain-specific launch libraries including a domain-specific library **USLAM** relating to a Universal SLA management product (and defining keywords such as {{USLAM.SLA_ID}}, {{USLAM.CUSTOMER}}, and so on) and a domain-specific library **CCD** relating to a customer care dashboard product (and defining keywords such as {{CCD.STARTDATE}}, and so on).

The libraries and keywords available for use in the resolution process can be extended by the developer very easily, using annotation, for example java annotation, to support additional global launch keywords and/or new domain launch keywords. The launch engine is able to find such keywords dynamically and solve them without any external declaration.

In a particular example of the web-application-launch API which accommodates global and contextual keywords, and where java coding is used, the keyword resolution process may include a two-stage scanning process:
Stage 1: at initialization of the host application, a first scanning process is performed to collect all global launch parameters (global keywords) that are present in a special directory. All the java archive files (JAR files) are scanned to find specific java annotations and stored to enable rapid determination of the code portions that are required to solve global launch parameters.
Stage 2: at execution of a launch, a second scanning process is performed to scan the local java code to locate contextual parameters (keywords) to solve.

The above-mentioned two stages are called in order to generate the final URL to launch - either in an external manner (another web browser page) or in an internal manner (sending a notification to a launch content portlet) leveraging the component approach of an enterprise portal.

It is worthwhile to consider in greater detail the procedure that is implemented for keyword resolution according to this example.

According to this example of the web-application-launch API component, launch SDK capabilities are based on java annotation and a pre-defined directory. These annotations and directory scanning avoid static launch definitions. The latest available code is used for solving launch parameters. Moreover, the procedure is easily extensible and open to any developer. Furthermore, certain examples support typed keywords (string, date, Boolean) to ease the edition of missing parameters.

This launch solution is very easy to extend and two ways are provided for extending supported keywords: keywords may be grouped by domain (e.g. ENV, USLAM, CCD, and so on), and by type (global or contextual). By leveraging java annotation, this example enables the implementation to be simplified. According to this example it is convenient to use the following annotations:
@DOMAIN (name="myDomain") defines the name of the launch domain
@KEYWORD (domain="myDomain", name="myAttribute", type-"string|date|boolean")
   - where Domain is optional (defined previously using @domain)
   - type is String by default but can be set explicitly to date, integer or boolean.
@Default is a method to call when a keyword is not found during the resolution process, it helps to put in place a rescue procedure and supports dynamic name of launch keywords.

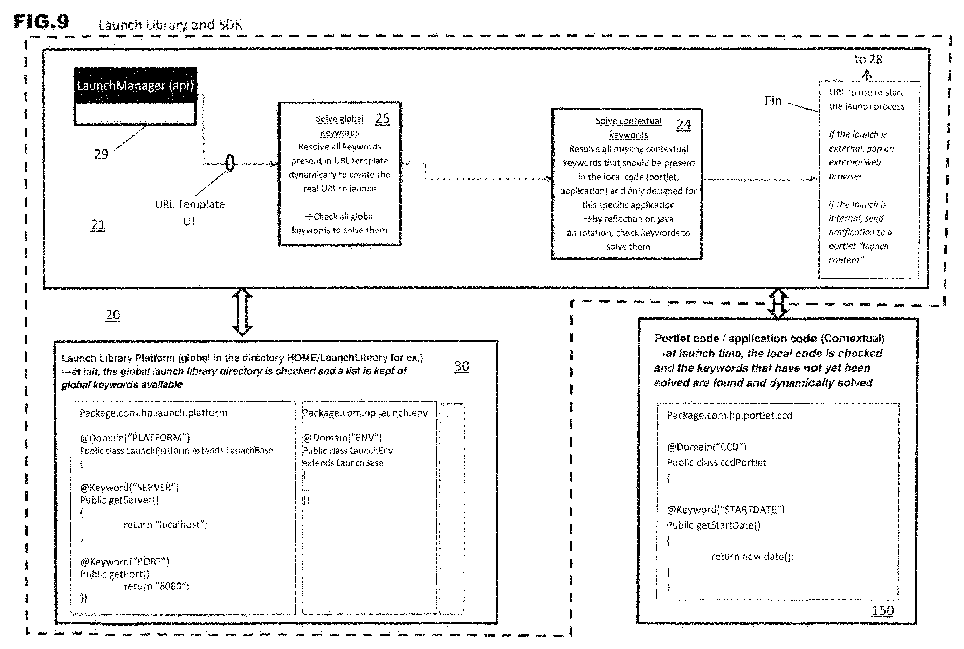

Fig.9 illustrates an example of the above-mentioned two-stage process for resolving keywords in the URL template of a launch at the time of execution, again in a case where java code is employed.

Fig.9 illustrates the case where an example of the web-application-launch API component is integrated into an application which provides a customer care dashboard and a universalized SLA manager. In Fig.9 only certain functionality associated with portions of the API component 20 is illustrated (that is, functionality associated with the launch services module 21 and the launch library directory 33), together with functionality associated with a portion 150 of the host portal/application.

In the example illustrated in Fig.9, when a launch whose launch definition incudes a URL template UT is to be executed, the API of the launch services module (designated Launch Manager 29 in Fig.9) specifies how the keywords in the URL template UT are to be resolved. Firstly, the global keywords of the URL template UT are resolved by the global keyword resolution module 25, then the contextual keywords are resolved using the contextual keyword resolution module 22. This produces a final URL, Fin, to be supplied to the execution module 28 so that launch of the external web application can be executed.

According to the case illustrated in Fig.9, there are two launch library domains - PLATFORM and ENV. These libraries store the available global launch parameters (keywords) that do not depend on specific data/context internal to the host application. Launch library ENV exposes keywords found in the operating system environment (for example username, path, and so on). The launch library PLATFORM exposes all keywords related to the installation of the platform (CCD, or USLAM, and so on). The keywords may relate to servers, ports, security choices, and so on, defined during installation or during a configuration phase. These keywords are global (in the sense that they do not depend on data/context internal to a specific application) but they are related to the product installation or system.

These two domains are implemented using an external java archive file (JAR file) and using the above-mentioned two annotations @DOMAIN and @KEYWORD. The two JARs are placed in a global launch library directory corresponding to the launch library directory 33 shown in Fig.5. The global launch library directory is the special directory which is scanned, at initialization of the host application, to list all global keywords that are available for resolution.

Typically, the web-application-launch API component is acquired by a developer as a kind of toolkit and may already comprise a set of common launch library files. The developer may extend the list of launch libraries by providing the appropriate JAR file at the specified directory and restarting the application.

In an example such as that of Fig.9 where contextual keywords are used in addition to global keywords, the possible contextual keywords that may be included in a URL template are implemented in the application code itself (e.g. in an SLA_status portlet or CCD portlet of a host portal, in a host web application). The relevant portion of the host application/portal is indicated by 150 in Fig.9. In cases where contextual keywords are used this provides useful extension of the adaptability of launches compared to the case where only global launch parameters are employed. However, to expose the value of a contextual keyword it is necessary to access data or context internal to the specific application being implemented. For example, an SLA_status portlet may expose the SLA_ID using an USLAM.SLA_ID keyword, this keyword being mapped to an internal method with @DOMAIN("USLAM") and @KEYWORD(USLAM_ID). This keyword thus browses internal data (java entity bean retrieved by the database used in the host application) and returns the correct attribute that matches the information (identifier).

The contextual resolution is performed at launch execution and involves browsing the local code of the application. For example, in the case of a host portal having a CCD portlet, the CCD portlet may be scanned to find "STARTDATE" (where start date is an input field of the portlet that starts an SQL request to a database, and so on). In this way a launch dedicated to this portlet can leverage this specific contextual keyword. Moreover, the tags list in the definition of the relevant launch can be associated with "ccdportlet" to provide the appropriate scope of visibility of this launch.

Although the foregoing examples relate to cases where machine readable instructions are provided in the form of java code, it is to be understood that other coding languages may be used, for example other languages which provide annotation capabilities.

As indicated above, certain examples of the web-application-launch API component provide a launch services module, specify a launch model which includes, in launch definitions, a URL template containing launch parameters to be resolved at launch execution, and provide a resolution mechanism for resolving the launch parameters dynamically at launch execution. Web-application-launch APIs according to such examples provide developers with an open and easily-extensible launch mechanism that can be integrated into applications and portals with relatively little work.

Optionally, certain examples of the web-application-launch API components may specify a launch model and resolution mechanism which accommodate contextual launch parameters as well as global launch parameters. In such cases there is enhanced flexibility in the manner in which launches can be adapted to the context in which execution of the launch is called. Optionally, certain examples of such web-application-launch API components may leverage an annotation system, e.g. java's advanced annotation system, to dynamically discover the keywords to be supported by the launch mechanism.

Optionally, certain examples of the web-application-launch API may specify a launch model which includes lists of tags in the launch definitions, and the launch services module may include a mechanism, based on matching tags, for identifying the launches that are available to components of the host application in specified circumstances. Web-application-launch API components offering these optional features enable the visibility of launches to be controlled in a fine-grained and easily extensible manner.

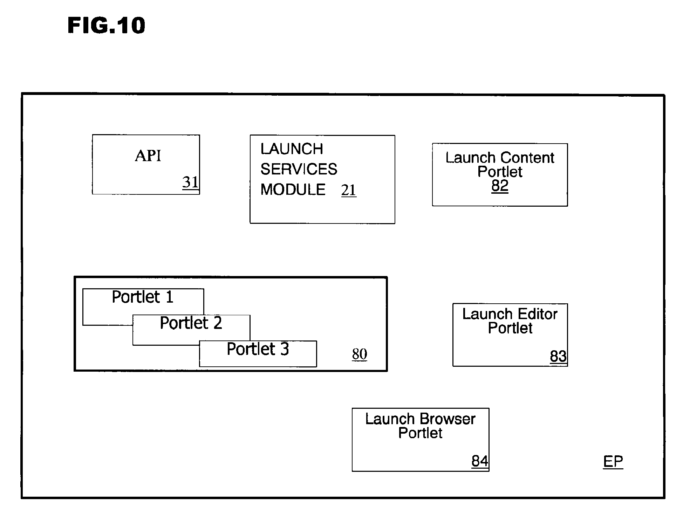

Fig.10 illustrates an instance of an enterprise portal that integrates a particular example of the web-application-launch API component to provide the enterprise portal with facilities for particularly simple browsing, searching, editing and executing launches, in addition to functions as in the examples described above.

According to the example of Fig.10, the enterprise portal EP includes:
- a set of portlets 80 providing the user with functionality specific to the enterprise portal (3 portlets are shown in this example but the number is not limited to three),
- the API 31 of the web-application-launch API component (defining the format of launch definitions, and so on),
- a launch content portlet 82 in charge of displaying the result of a launch embedded into the enterprise portal (this enables an internal launch to be displayed embedded in a specific area of the portal and updated dynamically by another portlet).
- a launch editor portlet 83 in charge of creating, editing and deleting defined launches (in effect an assistant to help the developer build launch definitions and preview the available keywords dynamically discovered using java reflection/annotation or comparable capabilities in another coding language),
- a launch services module 21 used by the portal to get a list of launches available under specific circumstances, for example so that the list can be displayed to the end user, and that performs keyword resolution and execution of launches (as described above),
- a launch browser portlet 84 that allows an end user to group and keep visible a set of launch icons for launches that do not need any contextual keyword resolution. So, all the global launches can be visually displayed in a specific area applying some filtering criteria. Using as a filtering mechanism the tag-based mechanism described above, the visibility of launches can be controlled in relation to instantiated multiple portlets having different filtering criteria. For example, a specific tab can be dedicated to the launches available for a specific user in the portal.
In certain examples, the launch content portlet, launch editor portlet and launch browser portlet support standard inter-portlet communication techniques to update their content, and support extension as described in the applicant's co-pending European patent application number 13 306 496.4.

A portal having the elements illustrated in Fig.10 benefits from a particularly rich set of services in relation to launches, for example in relation to search, resolution and execution of launches.

Certain examples of the web-application-launch API component are fully compatible with the techniques for managing security and permissions described in the applicant's co-pending European patent application no. 14290023.2.

It may be considered that a host web application or portal that has integrated an example of the web-application launch API component according to the present disclosure provides a web-application-launch system comprising:
a component, in a first web application or portal;
a launch-definition module to provide a launch-definition of a launch, of a second web application, available to be called for execution by the component, the launch-definition including a list of identifiers of launch parameters; and
a launch manager responsive to issuance, by the component, of a call for execution of a launch to perform dynamic assignment of arguments to the launch parameters identified by the launch parameter identifiers in the launch definition of the called launch.

A host web application or portal that has integrated an example of the web-application launch API component according to the present disclosure may be implemented in the form of a non-transitory computer readable medium including machine readable instructions that when executed by a computer perform execution of a launch of a web application external to a host web application or portal, responsive to a call for execution of the launch by a component of the host web application or portal.

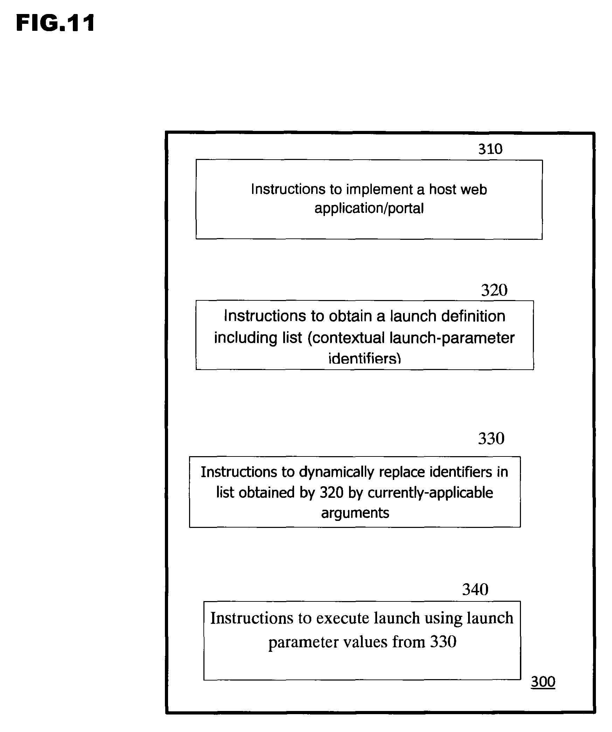

Fig.11 illustrates an example of such a non-transitory computer readable medium 300. As illustrated in Fig.11, the computer readable medium includes:
instructions 310 to implement the host web application or portal, including the component capable of calling for execution of the launch of the external web application;
instructions 320 to obtain a launch-definition of a launch of the external web application, the launch-definition including a list of contextual launch-parameter identifiers;
instructions 330 to dynamically replace the list of contextual launch-parameter identifiers in the launch-definition of a called launch by a list of corresponding arguments, the argument used to replace a contextual launch-parameter identifier being the value of the corresponding launch parameter as applicable when execution of the launch is called by the component of the host web application or portal; and
instructions 340 to execute the called launch using launch parameter values defined by the list of arguments.

Various modifications and extensions can be made of the examples described above.

## Claims

1. A web-application-launch application programming interface (API) component for integration to a host web application or portal, the web-application-launch API component comprising:
an API specifying a launch-definition format applicable to a launch of a web application external to the host web application or portal, wherein a launch definition according to the specified launch-definition format includes a URL template comprising a list of keywords; and
a launch services module to manage execution of a launch of an external web application, the launch services module comprising:
a keyword-resolution module, responsive, to a call for execution of a launch, to resolve the keywords of the URL template in the launch definition of the called launch dynamically, and
an execution module to implement execution of a called launch, the execution being performed in accordance with the keywords in the URL template of the called launch as resolved by the keyword-resolution module when execution of the launch is called.

2. The web-application-launch API component according to claim 1, wherein:
the API specifies a launch-definition format wherein the URL template of a launch definition comprises a list of global keywords, and
the resolution module of the launch services module comprises a global-keyword resolution module to scan annotations in a global keyword directory to find a value of the global keyword(s) in the launch definition of a launch called by a component of the host application or portal.

3. The web-application-launch API component according to claim 2, wherein:
the global-keyword resolution module is responsive to initialization of the host web application or portal to perform the scan of annotations in the global keyword directory.

4. The web-application-launch API component according to claim 3, comprising the global keyword directory.

5. The web-application-launch API component according to claim 2, wherein:
the API specifies a launch-definition format wherein the URL template of a launch definition comprises a list of global and contextual keywords, and
the resolution module of the launch services module comprises a contextual-keyword resolution module to retrieve, from a component of the host application or portal calling for execution of a launch, a value of the contextual keyword(s) in the launch definition of the called launch.

6. The web-application-launch API component according to claim 1, wherein:
the API specifies a launch-definition format wherein a launch definition comprises a list of tags, and
the launch services module comprises a search module to identify an available launch by matching the list of tags in the launch definition of the launch to a list of tags received from a component of the host web application or portal, and to inform the component sending the list of tags of the available launch.

7. The web-application-launch API component according to claim 1, for integration into a host portal, wherein the API specifies a launch-definition format wherein a launch definition comprises a launch mode indicator and a value of the launch mode indicator can indicate that a launch content portlet is to be added to the host portal, or updated, when the launch corresponding to the launch definition is executed, and the web-application-launch API component further comprises a launch content portlet management module to create and update launch content portlets.

8. The web-application-launch API component according to claim 7, further comprising:
a launch editor portlet to create, edit and delete launch definitions.

9. The web-application-launch API component according to claim 1, integrated to a host web application comprising
a component capable of calling for execution of a launch of a web application external to the host web application.

10. The web-application-launch API component according to claim 1, integrated to a portal comprising
a component capable of calling for execution of a launch of a web application external to the host portal.

11. A web-application-launch system comprising:
a component, in a first web application or portal;
a launch-definition module to provide a launch-definition of a launch, of a second web application, available to be called for execution by the component, the launch-definition including a list of identifiers of launch parameters; and
a launch manager responsive to issuance, by the component, of a call for execution of a launch to perform dynamic assignment of arguments to the launch parameters identified by the launch parameter identifiers in the launch definition of the called launch.

12. The web-application-launch system according to claim 11, wherein:
the launch definition module comprises a module to access a stored launch-definition comprising a list of global and contextual keywords, the global and contextual keywords constituting said identifiers of launch parameters, and
the launch manager comprises a keyword-resolution module to assign arguments to the contextual keywords in the launch-definition of a called launch, the argument assigned to a contextual keyword being the value of the corresponding launch parameter as applicable when execution of the launch is called by the component of the first web application or portal.

13. A non-transitory computer readable medium including machine readable instructions that when executed by a computer perform execution of a launch of a web application external to a host web application or portal, responsive to a call for execution of the launch by a component of the host web application or portal, the instructions comprising instructions to:
implement the host web application or portal, including the component capable of calling for execution of the launch of the external web application;
obtain a launch-definition of a launch of the external web application, the launch-definition including a list of contextual launch-parameter identifiers;
dynamically replace the list of contextual launch-parameter identifiers in the launch-definition of a called launch by a list of corresponding arguments, the argument used to replace a contextual launch-parameter identifier being the value of the corresponding launch parameter as applicable when execution of the launch is called by the component of the host web application or portal; and
execute the called launch using launch parameter values defined by the list of arguments.

14. The non-transitory computer readable medium according to claim 13, wherein:
the instructions to obtain a launch-definition comprise instructions to obtain a launch-definition including a list of global launch-parameter identifiers and a list of contextual launch-parameter identifiers, and
there are further provided instructions to dynamically replace the list of global launch-parameter identifiers in the launch-definition of a called launch by a list of corresponding arguments, the argument used to replace a global launch-parameter identifier being identified by scanning annotations in a global launch-parameter directory.

15. The non-transitory computer readable medium according to claim 14, wherein:
the instructions to dynamically replace the list of global launch-parameter identifiers in the launch-definition comprise instructions to perform a scan of global launch-parameters in the global launch-parameter directory responsive to initialization of the host web application or portal.
